(19)

Europäisches
Patentamt
European
Patent Office
Office européen
des brevets

(11)　**EP 2 688 242 A1**

(12)　**EUROPEAN PATENT APPLICATION**

(43) Date of publication:
**22.01.2014 Bulletin 2014/04**

(21) Application number: **12177358.4**

(22) Date of filing: **20.07.2012**

(51) Int Cl.:
**H04L 12/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Pouyllau, Helia
91620 Nozay (FR)**
• **Lamali, Mohamed Lamine
91620 Nozay (FR)**

(74) Representative: **Lebkiri, Alexandre
Cabinet Camus Lebkiri
87 Rue Taitbout
75009 Paris (FR)**

(54)　**An improved method for computing a constrained path in a network**

(57)　Method for computing path between a source
network equipment and a target network equipment,
source and target network equipments belonging to two
different administrative domains of a large network, the
path being constrained by a vector of constraints the
method comprising the following steps:
- selecting (200) a sequence of network elements according to the target and the vector of constraint,
- querying (210) the computation of the path by using the
selected sequence of network elements,
- receiving (220) a success or failure response for the
path computation the method being characterized in that
it comprises the following steps:
- updating (220) at least one discriminating value related
to the target and the vector of constraints and to the target
depending on at least the response, the update being
made by at least one updating algorithm,
- using (220) the discriminating value in the selecting a
sequence of network elements step.

**Fig. 2**

EP 2 688 242 A1

## Description

### FIELD OF THE INVENTION

The present invention relates to an improved method for computing a constrained path in a large network comprising several domains.

Such a method may be used in any multi-domain network system comprising a plurality of domains, such as, but not exclusively, a plurality of interior gateway protocol areas (IGP), a plurality of autonomous systems (AS) or a plurality of generalized multiprotocol label switching (GMPLS) architecture overlay networks. For clarity one will speak of administrative domain as a set of network equipments being managed by a same Network Management Equipment (NME).

### BACKGROUND OF THE INVENTION

To communicate over a network one need a transmitting, or source, node, a receiving, or target, node and a path between the two said nodes. Each node belongs to an administrative domain or domain. The transmitting domain and receiving domain are the same or not. Most of the time the communication is bidirectional. The communication may have quality constraints. Those constraints are known as Quality of Service (QoS) or SLAs (Service Layer Agreement). A path is asked by a Path Computation Client (PCC) to a Path Computation Element (PCE) according known protocols as reminded below. Basically a PCC application of the source node asks to a PCE application of the domain to which the source node belongs a path, with or without constraint, to the target node. The PCC receive in return a message containing a path to the target or a NO_PATH message. A message containing a path is a success message, when a NO_PATH message is a failure message. Of course this is the simplest case. The source node may ask for multiple path to multiple target with multiple vectors of constraints. But for our present concerns one can reduce our considerations to one single path computation.

A Path Computation Element architecture, according to the Request For Comments 4655 (RFC4655), is defined to support inter-domain path computation under Quality of Service (QoS) constraints where a domain can be a routing area, a routing layer or an Autonomous System. When the source and target node of a path computation request do not belong to the same domain, a sequence of Path Computation Elements (PCE) is involved. The path computation procedure, Backward Recursive Path Computation (BRPC), as defined by RFC5441 supposes that the sequence of PCE is known. Indeed, several RFCs 5088 and 5089 propose extensions to Open Shortest Path First (OSPF) and Intermediate System to Intermediate System (ISIS) to discover PCEs within a routing area. In an inter-AS context, draft-kumaki-pce-bgp-disco-attribute-06.txt is an equivalent proposal using the Internet routing protocol, Bordure Gateway Protocol (BGP).

But, in general, path computation under QoS constraints is highly dependent of the known sequence of domains or ASes, and thus of the known sequence of equipments over which the computation is performed.

The standardized procedure to compute paths under Traffic Engineering (TE) - and, when policing is activated, QoS - constraints it the Backward Recursive Computation Protocol (BRPC). In this protocol a path-computation request is forwarded through a known sequence of PCEs until it reaches the target PCE (i.e. the PCE of the target domain). In this case PCE have to be considered as Network Management Elements. The path computation is backwardly performed until it reaches the source PCE.

One major inconvenient of these solutions is their verbosity and thus their impact on the available bandwidth in the network. Indeed each PCE as its own path table with the associated vector of constraint. When one constrained path is asked, all the matching path in the path table are computed to find one effectively matching target and constraints path.

To tackle this issue various proposals have been realized.

One of these proposals is a Forward Discovery Path Computation protocol (FDPC) published as EP225702.

Another of these proposals is the use of SLAs at a business/service layer to enforce the selection of AS as described in [DSSL08] Douville R., Le Roux J., Rougier J., Secci S., A Service Plane over the PCE Architecture for automatic Multi-Domain Connection-Oriented Services, IEEE Communication Magazine, June 2008.

As the first proposal explores many PCE sequences, it generates as much path-computation requests and consequently uses many PCE resources. Although solution 1 advantageously competes to BRPC the mechanisms it includes to avoid flooding are not based on QoS information.

The second proposal provides an identification of PCE sequences based on the negotiation of Service Level Agreements at a business layer. Hence, this solution is highly dependent of a complex system at a higher level (inter-domain O/BSS communications), besides it does not solve the problem at an intra-AS level.

### SUMMARY OF THE INVENTION

The invention aims to remedy all or some of the disadvantages of the above identified prior art, and particularly to propose ways to allow the reduction of flooding.

To this end the invention proposes a mechanism to maintain sequences of equipments according to the successes or failures of the path-computation responses. The invention can be used prior to any path-computation procedure (e.g. BRPC) in order to identify the sequence of equipments that will be used for the path-computation. The invention advantageously complements FDPC providing a smarter mechanism to limit the number of sequences the FDPC, or any pat computation algorithm, process would explore. It can also be used within the second proposal for two different purposes: 1) at an intra-AS level to select the sequences of equipments that will identify the internal path for a given SLA, or 2) at an inter-AS level to identify the AS-path (in such embodiment, the business/service layer is the equipment performing the path-computation).

To this end the invention as for object a method for computing path between a source network equipment and a target network equipment, source and target network equipments belonging to two different administrative domains of a large network, the path being constrained by a vector of constraints the method comprising the following steps:

- selecting a sequence of network elements according to the target and the vector of constraint,
- querying the computation of the path by using the sequence of network elements,
- receiving a success or failure response for the path computation

the method being **characterized in that** it comprises the following steps:

- updating at least one discriminating value related to the target and the vector of constraints and to the target depending on at least the response, the update being made by at least one updating algorithm,
- using the discriminating value in the selecting a sequence of network elements step.

Beside the main characteristic that have been mentioned in the preceding paragraphs, the method of the invention may have one or more of the following additional characteristics, taken individually or according to any technically possible combinations.

The updating algorithm depends on the relation of the discriminating value with the selected sequence of network elements.

Sequence of network elements are stored according to data model in which each sequence of network elements is an object comprising at least four related properties:

- an identifier of a target area, a target domain or a target autonomous area,
- a sequence of at least one identifier of one equipment to reach the target area, target domain or target autonomous area,
- a vector of quality constraints
- a discriminating value.

The selecting step uses an index on the property identifier of a target area.

The selecting step uses an index on the property vector of quality constraints.

The updating algorithm comprises the following step:

If a success response is received then update the used sequence of network elements according to following formula :

$$dv = dv + \beta * ( 1 - dv)$$

where dv is the discriminating value of the updated and $\beta$ is a computed value.

The updating algorithm comprise the following step :

If a success response is received then
update the not used sequences of network elements having the same target property and the same vector of quality constraints that used one according to following formula :

$$dv = dv - \beta * dv$$

where dv is the discriminating value of the updated sequence of network elements and $\beta$ is a computed value.

The updating algorithm comprises the following step:

If a failure response is received then
update the used sequence of network elements according to following formula :

$$dv = dv - \beta * dv$$

where dv is the discriminating value of the updated sequence of network elements and $\beta$ is a computed value.

The updating algorithm comprise the following step :

If a failure response is received then
update the not used sequences of network elements having the same target property and the same vector of quality constraints that the used one according to following formula :

$$dv = dv + \beta * ( 1 - dv)$$

where dv is the discriminating value of the updated sequence of network elements and $\beta$ is a computed value.

$\beta$ is updated as follow:

$$\beta = \beta - ( \ \beta \ {}^{*} \ \beta \ / \ ( \ \beta + 1 \ ) \ )$$

β is a product of a constant and of a success response numbering over request numbering ratio.

β depends on the sequence of networks element.

The sequence of network elements is selected according to the highest value of the discriminating value.

The sequence of network elements is selected according to the proximity of the discriminating value to a pseudo random number generated at the moment of the selection.

To those ends the invention has also for object a digital data storage medium encoding a machine-executable program of instructions to perform the method according to any possible combination of preceding characteristics.

**BRIEF DESCRIPTION OF THE FIGURE**

The invention will be better understood upon reading the following description and examining the accompanying figures. These are presented for information purposes only and in no way limit the invention. Figures show:

- Figure 1: an illustration of an infrastructure allowing the implementation of the invention.
- Figure 2: an illustration of steps according to the invention.

For clarity, the same or similar elements are identified by identical reference numerals throughout the figures.

**DESCRIPTION OF ONE EMBODIMENT OF THE INVENTION**

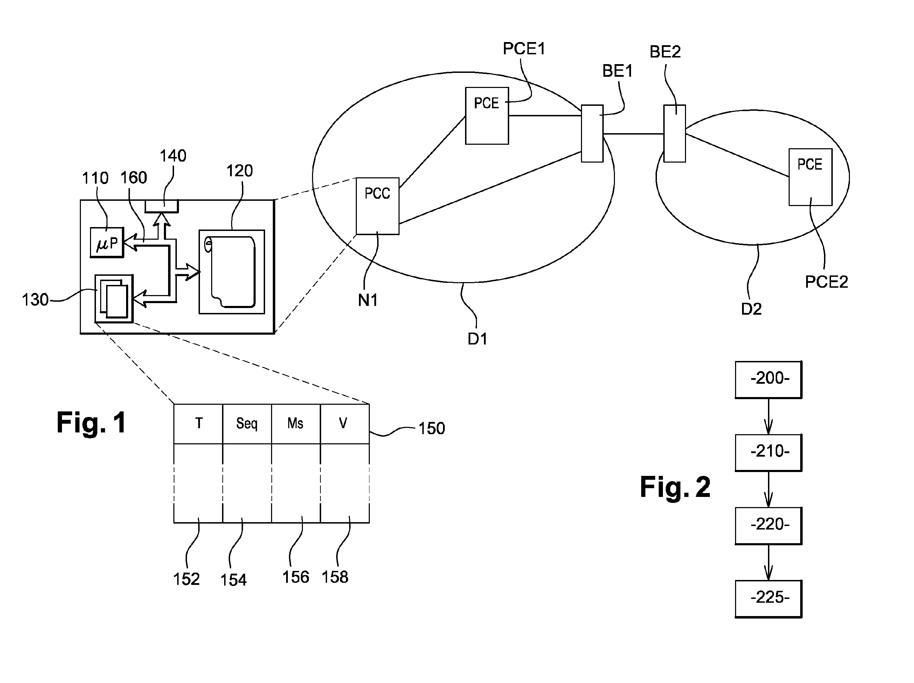

Figure 1 shows a domain D1 interconnect to a domain D2. It is here reminded that by domain one generalizes the following notions: domain, IGP, AS MPLS, GMPLS. Domain D1 and domain D2 are interconnected via a border equipment BE1 of domain D1 being physically connected to a border equipment BE2 of domain D2. Domain D1 also comprises:

- a path computation equipment PCE1 connected to border equipment BE1,
- a general node N1 at least connected to equipment PCE1 and to border equipment BE1,

Domain D2 also comprises:

- a path computation equipment PCE2

The real complexity of domains D1 and D2 is hidden for clarity purposes. For the requirement of this description one considers that node N1 is a source node wishing to join a node in domain D2. In this configuration domain D1 is the source domain and domain D2 is the target domain. The two cited domains, with other, are part of a larger network.

Figure 1 also shows some details, concerning the invention, of node N1. Basically node N1 implements a Path Computation Client according to RFC 4655. The invention implements and improves such a client by using at least but not only, means shown in figure 1.

- A microprocessor 110,
- A program memory 120,
- A data memory 130,
- A connection interface 140.

The microprocessor 110, program memory 120, data memory 130 and connection interface 140 are interconnected by a bus 160. When nodes N1 acts, this means that the microprocessor 110 executes some instruction codes registered in program memory 120. Program memory 120 comprises, at least but not only, instruction codes corresponding to the steps of the invention. Messages transmitted and received by node N1 transit via the interface 140 according to known protocols, for example Internet Protocol. This is a general architecture for the nodes of a network. The program memory 120 is loaded from a data storage device or is herself a data storage device.

For the needs of the invention data memory 130 is structured to store the needed and produced data. These data may be stored as flat table, object database or hierarchic data. This is not a key point for the invention. In this description one considers flat tables such as existed in relational databases. Figure 1 show a table 150 stored in data memory 130. More generally table 150 is a storage for sequence of network elements objects. Table 150 comprises the following columns:

- Column 152 storing an identifier of a target domain or device in a domain,
- Column 154 storing a sequence of identifier of equipments allowing to compute a network path to the target. Such equipments are network equipments with path computation capabilities. Such equipments are usually known as PCE, or more generally NME with path computation capabilities.
- Column 156 storing a set or vector of quality constraints,
- Column 158 storing a discriminating value.

The columns store properties of the sequence of network elements object. The properties are related because they belong to the same sequence of network elements object. In the described embodiment one can say the properties are related because they belong to the same row.

An identifier of a target or of an identifier of a network equipment is, for example, an address according to Internet Protocol version 4 or version 6. In other embodiments it should be any value identifying with no ambiguity the device.

In a variant of the invention columns 154 stores an identifier of a "next equipment" in replacement of a full sequence of equipments. In this case a "next equipment" is the nearest, from the source device, equipment in the replaced sequence.. Furthermore, to limit space explosion, only a sub-set of sequences or next equipments can be stored.

A set or vector of quality constraints is a set a values related to Traffic Engineering (TE) data. Values should be minimal acceptable or maximal acceptable. Values relates for example to:

- Available bandwith or bandwith reservation,
- Maximum number of hope,
- TE- metrics,
- Latency,
- Encryption,
- Tunneling,
- End-to-end delay,
- End-to-end jitter

the list is not exhaustive.

A row of the table 150 is called a sequence of network elements. Most often, in the context of the invention, network elements of the sequence are PCE. The invention is also applicable if the sequence is reduced to one element. In this description one uses row or sequence of network elements indifferently.

The values of column 158 are said discriminating because they allow differentiating the sequences of network elements, that is the rows, stored in the table 150 during a selection process. In the invention the discriminating values are calculated according to computation results to make them more relevant. In here one talks of rows because we use a flat table as storage for the description. One understands that with other storage, relational and/or hierarchical, the row becomes a relational and/or hierarchical object.

The table 150 may be indexed with one or more index. An index is, for example, a hash table. A first index should be on the column 152 of target identifier. A second index should be on the column 156. In this case the access to a row is made, knowing a target identifier, a first subset of row corresponding to the identifier, then a second subset of the first subset corresponding to the quality constraint. It then remains a third subset of value and sequence of network equipments. Finally to further increase select performance, one may order the third subset by the discriminating values.

Figure 2 shows a first step 200 of selection of a row among those recorded in the table 150. Step 200 is performed by node N1. Step 200 occurs when, for any reason, node N1 wishes to establish a communication with another node in another domain. For example node N1 wishes to establish a communication with a node of domain D2. In this case node N1 must at least know an identifier of the node he wishes to reach. By this node identifier, usually an IP address and a subnet mask, one should know the identifier of the domain containing the node: by applying the mask to the identifier. Domain D2 then becomes the target domain. In our example let's consider that there is a minimum bandwidth requirement. Node N1 will then browse table 150 to find the rows for which the value of column 152 matches the target domain identifier. This will give a first subset of rows. In the first subset the node N1 searches the rows for which the column 156 describes a bandwidth matching the required value. This will give a second subset of rows.

It will be understood that this is just one example of research. The same result may be obtained by browsing the table 150 differently.

To select a sequence of network elements, that is a row, among those of the second subset, node N1 has to consider the values of column 158, that is the discriminating values.

In a first embodiment node N1 pick the row having the highest value in column 158. This picking terminates step 200. Node N1 then proceeds to next step.

In a second embodiment of the invention the row is picked by using a probabilistic distribution. In this embodiment node N1 begin by compute a random value here named p for convenience. Then node 1 initialize a variable, here named s for convenience, to zero. Then for each row of the second subset node 1 process the following: if p superior to s and p inferior or equal to s more discriminating value then pick row. Else set s to s more discriminating value and process next row in the second subset. If none row is picked during the process then pick the last processed one. Node N1 then proceeds with next step.

Step 200 is followed by step 210 in which node N1 query the computation of the sequence of network elements picked on preceding step. For this node N1 produce a request message according to RFC 5441 and to primitive PCReq of this RFC. In this step node N1 acts as a PCC. The request message comprises three parameters picked in the picked row: the sequence of PCEs that will treat the request, the target domain identifier and the required bandwidth value. This request message is then send to the first PCE of the sequence. Usually this first PCE is in the domain to which the node N1 belongs, but this is not mandatory.

The path is computed by the PCEs in the sequence in a known manner, for example by the BRPC procedure.

From this point node N1 idles until he receives a response for his request message. This response will be, as stated by RFC 5441, a PCRep message. This message will be a success one or a failure one. A success message is also a message containing an Explicit Route Object (ERO) as defined by RFC 3209. A failure message is also a NO_PATH message. Basically a failure message is a response message that does not contain an ERO.

When the response reaches node N1, node N1 processes it in step 220. This processing is, at least but not only, an update of at least one row in the row the second subset produced in step 200.

In a first embodiment the values are updated as follows :

If a success response is received then

update used row, that is the row picked at step 200, according to following formula :

$$dv = dv + \beta * ( 1 - dv)$$

optionally: update the not used row having the same target property and the same vector of quality constraints that the used row, that are all the not picked row of the second subset produced at step 200, according to following formula :

$$dv = dv - \beta * dv$$

If a failure response is received then
Do nothing.
where dv is the discriminating value of the updated sequence of network elements and $\beta$ is a computed value. By optionally one means in a variant of the embodiment. In the example, the relations between the updated discriminating value and the selected sequence of network elements are : user or not used.

In a second embodiment of the invention one modify the first embodiment by doing the following in case of failure response :

update the used row according to following formula :

$$dv = dv - \beta * dv$$

optionally : update the not used row having the same target property and the same vector of quality constraints that the used row according to following formula :

$$dv = dv + \beta * ( 1 - dv)$$

where dv is the discriminating value of the updated sequence of networks elements and $\beta$ is a computed value. By optionally one means in a variant of the embodiment.

Typically, at setup, that is when table 150 is initialized and seeded with rows, the discriminating values are set to 0.5. A typical value for $\beta$ is 0.2. One can say the computed value of $\beta$ is 0.2, the computation is limited to retrieve a value from a memory. One notes that this should be others. For example a random initialization for discriminating values and even for $\beta$. One notes that more consistent results are obtained if this values are initialized with values exclusively comprised between 0 and 1, with 0 and 1 excluded.

In a variant of the invention, step 220 is followed by a step 225 of updating of $\beta$. For example, $\beta$ is updated by the formula :

$$\beta = \beta - ( \beta * \beta / ( \beta + 1 ) )$$

This update may be conditioned by a success or failure response or not conditioned.

In another embodiment of the invention $\beta$ is computed as $\alpha * r$. In this formula $\alpha$ is a constant initialized the same as $\beta$ in the preceding embodiment and r is a ratio between number of success and number of attempt. To achieve this, node N1 count, and store the result of the counting in counters, all the request messages he produces that is a rt counter, and count all the success message he receives that is a rs counter. Then r is equal to rs / rt. In a variant of this embodiment rt and rs are managed row by row. In this variant table 150 comprises two more columns to store rt and rs. In this case rt is the number of computations supported by the sequence of network elements and rs is the number of success response received for the computation from the same sequence.

In another embodiment of the invention $\beta$ depends on the sequence of networks element. As a sequence of network elements comprises four properties the dependence may be on any combination of these properties. For example $\beta$ depends on the target identifier and on the vector of quality constraint. This means that there are as many stored, and used, values for $\beta$ as unique pairs [target identifier, vector of constraints] in the storage 150 of sequence of network elements. In this case the computation of $\beta$ comprises a step of retrieving $\beta$ according to the properties of the sequence of network elements being updated.

## Claims

1. Method for computing path between a source network equipment and a target network equipment, source and target network equipments belonging to two different administrative domains of a large network, the path being constrained by a vector of constraints the method comprising the following steps:

   - selecting (200) a sequence of network elements according to the target and the vector of constraint,
   - querying (210) the computation of the path by using the selected sequence of network elements,
- receiving (220) a success or failure response for the path computation

the method being **characterized in that** it comprises the following steps:

- updating (220) at least one discriminating value related to the target and the vector of constraints and to the target depending on at least the response, the update being made by at least one updating algorithm,
- using (220) the discriminating value in the selecting a sequence of network elements step.

2. Method according to claim 1 **characterized in that** the updating algorithm depends on the relation of the discriminating value with the selected sequence of network elements.

3. Method according to any preceding claims **characterized in that** sequences of network elements are stored according to data model in which each sequence of network elements is an object comprising at least four related properties:

- an identifier (152) of a target area, a target domain or a target autonomous area,
- a sequence (154) of at least one identifier of one equipment to reach the target area, target domain or target autonomous area,
- a vector (156) of quality constraints
- a discriminating value (158).

4. Method according to claim 3, **characterized in that** the selecting step use an index on the property identifier of a target area.

5. Method according to any of the claims 3 or 4, **characterized in that** the selecting step use an index on the property vector of quality constraints.

6. Method according to any of preceding claims **characterized in that** the updating algorithm comprises the following step:

If a success response is received then
update the used sequence of network elements according to following formula :

$$dv = dv + \beta * ( 1 - dv)$$

where dv is the discriminating value of the updated sequence of network elements and $\beta$ is a computedvalue.

7. Method according to any of preceding claims **characterized in that** the updating algorithm comprise the following step :

If a success response is received then
update the not used sequences of network elements having the same target property and the same vector of quality constraints that the used one according to following formula :

$$dv = dv - \beta * dv$$

where dv is the discriminating value of the updated sequence of network elements and $\beta$ is a computed value.

8. Method according to any of preceding claims **characterized in that** the updating algorithm comprises the following step:

If a failure response is received then
update the used sequence of network elements according to following formula :

$$dv = dv - \beta * dv$$

where dv is the discriminating value of the updated sequence of network elements and $\beta$ is a computed value.

9. Method according to any of preceding claims **characterized in that** the updating algorithm comprise the following step :

If a failure response is received then
update the not used sequences of network elements having the same target property and the same vector of quality constraints that the used one according to following formula :

$$dv = dv + \beta * ( 1 - dv)$$

where dv is the discriminating value of the updated sequence of network elements and $\beta$ is a computed value.

10. Method according to any of claims 6 to 9 **characterized in that** after updating the sequence or sequences of network elements $\beta$ is updated as follow:

$$\beta = \beta - ( \beta * \beta / ( \beta + 1 ) )$$

**11.** Method according to any of claims 6 to 9 **characterized in that** $\beta$ is a product of a constant and of a success response numbering over request numbering ratio.

**12.** Method according to any of claims 6 to 11 **characterized in that** $\beta$ depends on the sequence of networks element.

**13.** Method according to any of preceding claims **characterized in that** the sequence of network elements is selected according to the highest value of the discriminating value.

**14.** Method according to any of preceding claims **characterized in that** the sequence of network elements is selected according to the proximity of the discriminating value to a pseudo random number generated at the moment of the selection.

**15.** A digital data storage medium encoding a machine-executable program of instructions to perform the method according to one of the preceding claims.

**Fig. 1**

| T | Seq | Ms | V | |
|---|-----|-----|---|---|
| | | | | 150 |
| | | | | |

152  154  156  158

110  160  140  120
µP  130

PCE1  BE1  BE2
PCE  PCE

PCC
N1
D1

PCE
PCE2
D2

**Fig. 2**

-200-
-210-
-220-
-225-

EP 2 688 242 A1

EP 2 688 242 A1

## EUROPEAN SEARCH REPORT

Europäisches Patentamt
European Patent Office
Office européen des brevets

**Application Number**

EP 12 17 7358

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 328 308 A1 (ALCATEL LUCENT [FR]) 1 June 2011 (2011-06-01) * paragraphs [0003], [0004]; figure 9 * * paragraph [0041] - paragraph [0057] * * paragraph [0118] - paragraph [0121] * * paragraph [0178] - paragraph [0183] * * paragraph [0198] - paragraph [0224] * ----- | 1,2,15 | INV. H04L12/56 |
| X | EP 2 159 974 A1 (ALCATEL LUCENT [FR]) 3 March 2010 (2010-03-03) * paragraph [0010] - paragraph [0012] * * paragraph [0027] - paragraph [0031] * ----- | 1,2,15 | |
| A | MOHIT CHAMANIA ET AL: "An Open-Source Path Computation Element (PCE) Emulator: Design, Implementation, and Performance", JOURNAL OF LIGHTWAVE TECHNOLOGY, IEEE SERVICE CENTER, NEW YORK, NY, US, vol. 30, no. 4, 1 February 2012 (2012-02-01), pages 414-426, XP011395646, ISSN: 0733-8724, DOI: 10.1109/JLT.2011.2170402 * the whole document * ----- | 1-15 | |
| A | SECCI S ET AL: "AS-level source routing for multi-provider connection-oriented services", COMPUTER NETWORKS, ELSEVIER SCIENCE PUBLISHERS B.V., AMSTERDAM, NL, vol. 54, no. 14, 6 October 2010 (2010-10-06), pages 2453-2467, XP027247862, ISSN: 1389-1286 [retrieved on 2010-04-10] * the whole document * ----- -/-- | 1-15 | TECHNICAL FIELDS SEARCHED (IPC) H04L H04W |

The present search report has been drawn up for all claims

| Place of search | Date of completion of the search | Examiner |
|---|---|---|
| The Hague | 15 August 2012 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

Europäisches Patentamt
European Patent Office
Office européen des brevets

**EUROPEAN SEARCH REPORT**

Application Number

EP 12 17 7358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 382 731 B1 (ZHAO FUYONG [US] ET AL) 3 June 2008 (2008-06-03) * column 3, line 60 - column 17, line 45 * ----- | 1-15 | |

TECHNICAL FIELDS SEARCHED (IPC)

The present search report has been drawn up for all claims

| Place of search | Date of completion of the search | Examiner |
|---|---|---|
| The Hague | 15 August 2012 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 7358

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2012

| Patent document<br>cited in search report | | Publication<br>date | Patent family<br>member(s) | | Publication<br>date |
|---|---|---|---|---|---|
| EP 2328308 | A1 | 01-06-2011 | NONE | | |
| EP 2159974 | A1 | 03-03-2010 | NONE | | |
| US 7382731 | B1 | 03-06-2008 | US<br>US | 7382731 B1<br>2008162723 A1 | 03-06-2008<br>03-07-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 225702 A

**Non-patent literature cited in the description**

- **DOUVILLE R. ; LE ROUX J. ; ROUGIER J. ; SECCI S.** A Service Plane over the PCE Architecture for automatic Multi-Domain Connection-Oriented Services. *IEEE Communication Magazine,* June 2008